## Europäisches Patentamt
## European Patent Office
## Office européen des brevets

(19)

(11) Publication number: **0 065 990**

**A1**

(12)
# EUROPEAN PATENT APPLICATION
published in accordance with Art. 158(3) EPC

(21) Application number: **81902821.8**

(22) Date of filing: **16.10.81**

Data of the international application taken as a basis:

(86) International application number:
**PCT/JP81/00287**

(87) International publication number:
**WO82/01340 (29.04.82 82/11)**

(51) Int. Cl.³: **B 23 Q 35/12**
**B 23 Q 15/22**

(30) Priority: **17.10.80 JP 145127/80**

(43) Date of publication of application:
**08.12.82 Bulletin 82/49**

(84) Designated Contracting States:
**DE FR GB**

(71) Applicant: **Fanuc Ltd**
**5-1, Asahigaoka, 3-chome**
**Hino-shi, Tokyo 191(JP)**

(72) Inventor: **IMAZEKI, Ryoji**
**987-44, Naganuma-cho**
**Hachioji-shi Tokyo 192(JP)**

(72) Inventor: **YAMAZAKI, Etsuo**
**566-93, Shimoongata-cho**
**Hachioji-shi Tokyo 192-01(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **AUTOMATIC TRACER CONTROL SYSTEM.**

(57) Improvement in machining accuracy and operational performance of a system of tracer control according to the signal from a tracer head. The system includes an input means (KB) for entering position information designating a given position on a model and a detecting means (PCX, PCY, PCZ) for detecting the position of a tracer head. During tracing machining, the differences between the work dimensions and the model dimensions are obtained on the basis of the position information and the detected results of the detecting means (PCX, PCY, PCZ), and then, after finishing the tracing operation, the machining conditions relating to the amount of cutting are changed so that the differences become zero and the tracing operation is executed again.

EP 0 065 990 A1

./...

FIG. 1

- 1 -

S P E C I F I C A T I O N

AUTOMATIC TRACER CONTROL SYSTEM

TECHNICAL FIELD

The present invention relates to an automatic tracer
control system which automatically detects the difference between the work size and the model size at a specified position
during tracing, automatically changed cutting conditions in
a manner to reduce the difference to zero and then resumes tracing.

TECHNICAL BACKGROUND

The tracer control system is to cut a work into the same
configuration as the model by bodily movement of a tracer head
tracing the model surface and a cutter head having mounted thereon
a cutter cutting the work but, in some cases, the work is not
sut into the same shape as the model under the influence of the
follow-up property of tracing, elastic deformation of the cutter
and so forth. To avoid this, in the prior art, the operator
measures the work size at a predetermined position to check for
a difference between it and the model size after completion of
cutting and, in the case where the difference is larger than a
predetermined value, a reference displacement, the cutter radius
and so forth are changed and then tracing takes place again,
thereby to make the difference smaller than the predetermined
value. With the abovesaid method, however, it is necessary
for the operator to actually measure the work size and modify
the reference displacement and so on and, therefore, the operation becomes troublesome; hence improvement is now desired.

## DISCLOSURE OF THE INVENTION

The present invention is to meet such a demand as described above, and has for its object to permit automatic modification of cutting conditions related to infeed, such as the reference displacemnt, the styus radius, the cutter radius, etc. in a manner to reduce the difference between the model size and the work size down to zero, thereby to simplify the operation and improve the cutting accuracy. According to the present invention, the difference detected between the model size and the work size at a predetermined position during tracing and, after completion of tracing, the cutting conditions are changed so that the difference may become zero, and then tracing is resumed; hence, the cutting accuracy and the maneuverability can be improved.

## BRIEF DESCRIPTION OF THE DRAWINGS

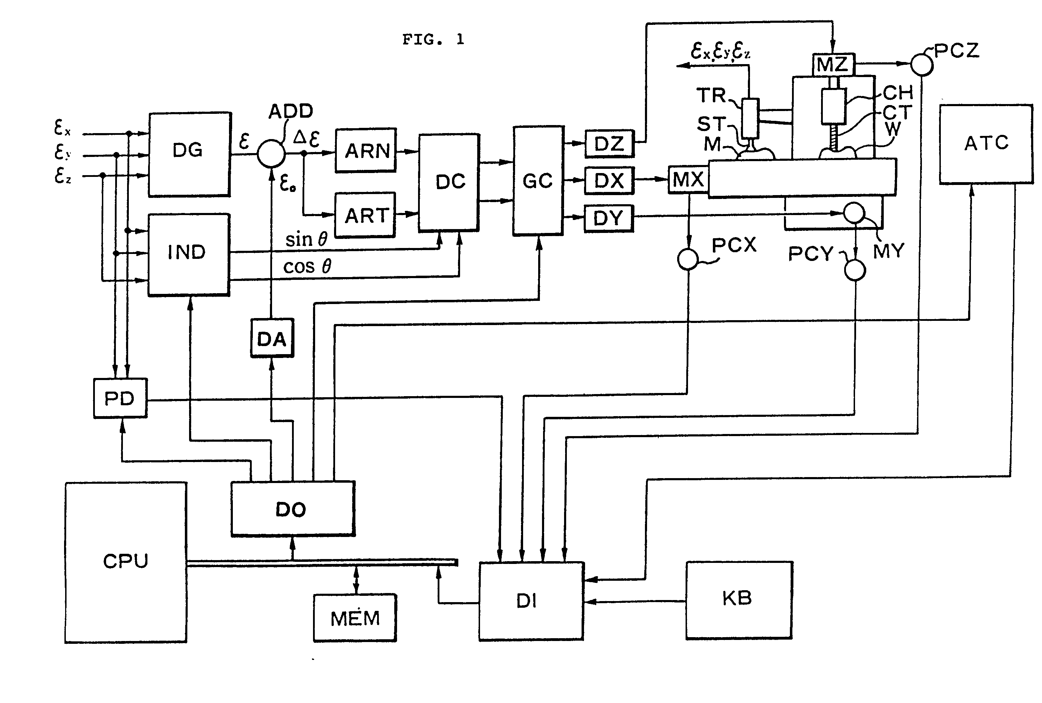

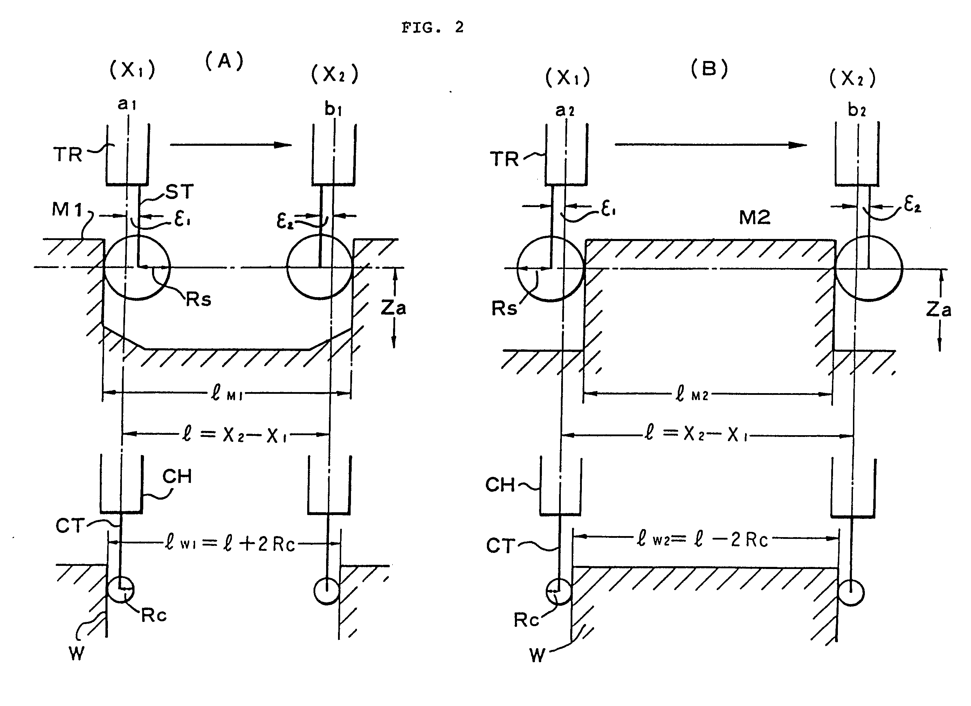

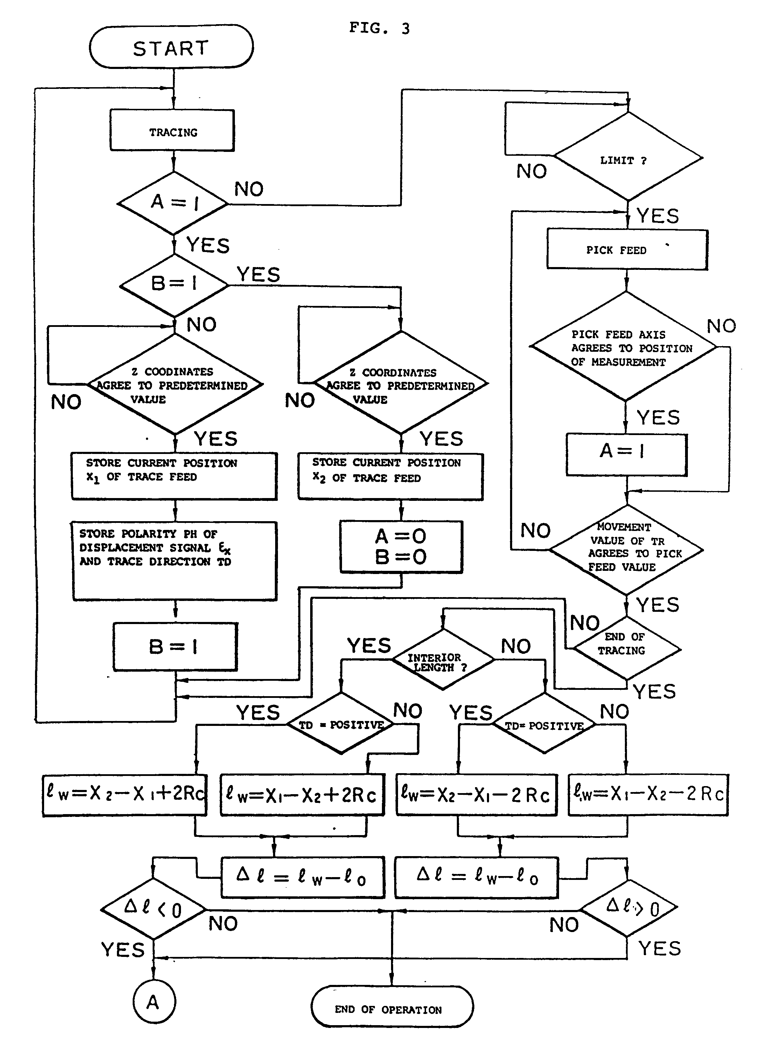

Fig. 1 is a block diagram illustrating an embodiment of the present invention; Figs. 2(A) and (B) are explanatory of the nammer how to obtain the work size and the model size; and Figs. 3, 4 and 5 are flowcharts explanatory of the operation of the embodiment.

## PREFERRED EMBODIMENTS OF THE INVENTION

For a detailed description of the present invention, the invention will hereinafter be described in detail with respect to its embodiments.

Fig. 1 is a block diagram illustrating an embodiment of the present invention. Reference characters DG and IND indicate a displacement calculation circuit and an indexing circuit, respectively, which are supplied with displacement signals $\varepsilon_X$, $\varepsilon_Y$ and $\varepsilon_Z$ from a tracer head TR, ARN and ART velocity arithmetic circuits, ADD an adder, DC a distribution circuit, GC a gate circuit, DX, DY and DZ amplifier output circuits, MX, MY and MZ servomotors, PCX, PCY and PCZ position detectors, TR a tracer head, ST a stylus, CT a cutter, CH a cutter head, M a model, W a work, ATC an automatic cutter change mechanism, KB a kyeboard, DI a data input device, DO a data output device, PD a polarity detector, DA a DA converter, MEM a memory and CPU a processor.

The stylus ST is brought into contact with the model M and is fed by the servomotors. Based on the displacement signals $\varepsilon_X$, $\varepsilon_Y$ and $\varepsilon_Z$ corresponding to displacement of the stylus ST, the displacement calculation circuit DG yields a composite displacement signal $\varepsilon = \sqrt{\varepsilon_X{}^2 + \varepsilon_Y{}^2 + \varepsilon_Z{}^2}$, whereas the indexing circuit IND yields displacement direction signals $\sin\theta$ and $\cos\theta$. The composite displacement signal $\varepsilon$ is applied to the adder ADD, wherein a difference $\Delta\varepsilon$ between it and a reference displacement signal $\varepsilon_0$ is obtained. In the velocity arithmetic circuits ARN and ART, normal velocity signal $V_N$ and tangential velocity signal $V_T$ are produced and, in the distribution circuit DC, a velocity command signal is produced based on the displacement direction signals $\sin\theta$ and $\cos\theta$, which signal is provided to the gate circuit GC. The velocity command signal is applied to the

- 4 -

amplifier output circuit selected by the gate circuit GC and the corresponding servomotor is driven in accordance with the velocity command signal, bodily feeding the cutter CT and the tracer head TR. Such operations as described above are already well-known.

In this embodiment, tracing operation data including data on the position information for specifying a predetermined position on the model M, the model size at the predetermined position and the radius of the cutter CT (hereinafter referred to as the cutter radius) are entered from the keyboard KB and stored in the memory MEM. During tracing the work size at the abovesaid predetermined position is obtained in the processor CPU based on the results of detection by the position detectors PCX, PXY and PCZ and the cutter radius. Further, the difference between the work size and the model size is obtained in the processor CPU and this difference is stored in the memory MEM. After completion of tracing, the reference displacement and the cutter radius are modified according to the difference stored in the memory MEM so that the difference between the work size and the model size may be reduced to zero, and then tracing is carried out again. Incidentally, the modification of the cutter radius is effected by replacement of the cutter through the automatic cutter change mechanism ATC the operation of which is controlled by the processor CPU.

Referring first to Figs. 2(A) and (B), a method of detecting the work size will be described.  Fig. 2(A) shows the case of detecting the interior length of the work and Fig. 2(B) the case of detecting the exterior length of the work.  Reference characters M1 and M2 indicate models and the other reference characters identical with those in Fig. 1 indicate the same parts.

As shown in Fig. 2(A), when feeding the tracer head TR along the model M in the direction indicated by the arrow, the cutter CT is also fed at the same time, cutting the work W.  Now, assuming, for example, that the Z coordinates of the tracer head TR have moved between two points $a_1$ and $b_1$, and that the X coordinates of the points $a_1$ and $b_1$ are $X_1$ and $X_2$, then the length $\ell$ between the points $a_1$ and $b_1$ becomes as follows:

$$\ell = X_2 - X_1 \quad \cdots\cdots\cdots\cdots\cdots\cdots\cdots (1)$$

The X and Y coordinates of the points $a_1$ and $b_1$ can be obtained based on the results of detection by the position detectors. In this case, since the tracer head TR and the cutter head CH are coupled together through a rigid body, the length of the work cut by the cutter CT during the movement of the tracer head TR from the point a to b, that is, the work size $\ell_{W1}$ becomes as follows:

$$\ell_{W1} = \ell + 2R_C \quad \cdots\cdots\cdots\cdots\cdots\cdots (2)$$

(where $R_C$ is the radius of the cutter CT).

The work size $\ell_{W2}$ in the case of the tracer head TR having moved between points $a_2$ and $b_2$ as shown in Fig. 2(B) becomes as follows:

$$\ell_{W2} = \ell - 2R_C \quad \cdots\cdots\cdots\cdots\cdots\cdots\cdots \quad (3)$$

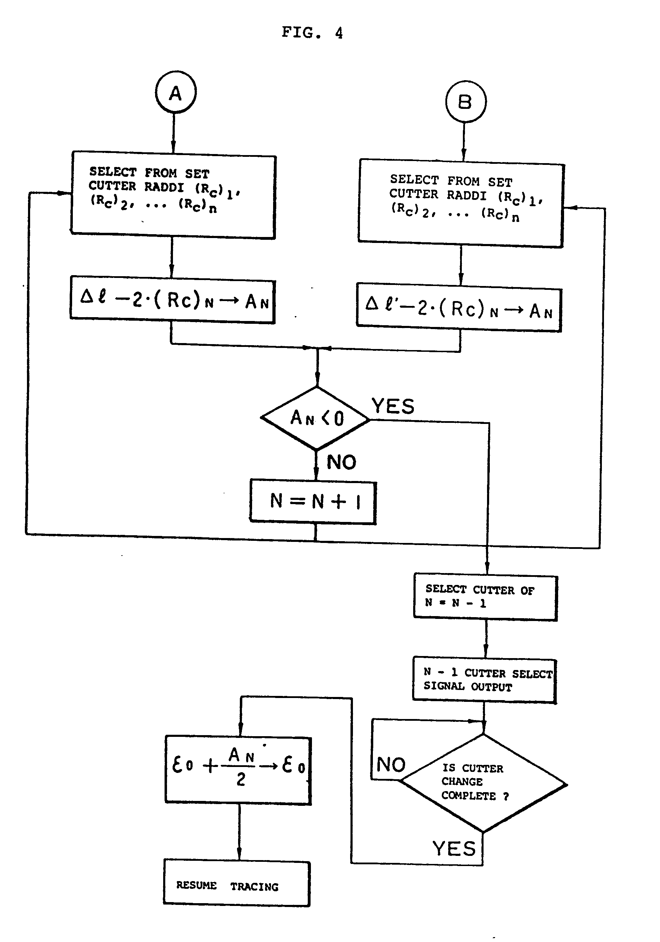

Now, the operation will be described with reference to flowcharts shown in Figs. 3 and 4. Fig. 3 shows the case where the trace feed axis is the X axis and flags A and B are set to "0" in the initial state.

When starting the tracing, since the flag A = 0 in the initial state, tracing and pick feed are repeatedly carried out until the pick feed axis is brought into agreement with the position of measurement of the work size. In this case, it is decided in the processor CPU on the basis of information applied thereto from the position detectors PCX, PCY and PCZ via the data input device DI whether the pick feed axis has been brought into agreement with the measurement position. Having decided that the axis has agreed with the measurement position, the processor CPU alters the flag A to "1".

Next, the processor CPU derives from the results of detection by the position detectors PCX, PCY and PCZ the X coordinates $X_1$ of the tracer head TR when the Z coordinates of the tracer head TR has reached a predetermined value. The X coordinates thus obtained is stored in the memory MEM and, at the same time, the polarity PH of the displacement signal $\varepsilon_X$ and the trace direction TD at this time are stored in the memory MEM and the flag B is altered to "1". In this case, the polarity PH has been detected by the polarity detector PH and provided via the data input device DI to the processor CPU. Provided that, for example,

the model M1 shown in Fig. 2(A) is now being traced, the X coordinates of the point $a_1$ is stored, and provided that the model M2 of Fig. 2(B), is being traced, the X coordinates of the Point $a_2$ is stored.

Next, the processor CPU obtains the X coordinates $X_2$ when the Z coordinates of the tracer head TR has reached the predetermined value again, stores it in the memory MEM and alters both of the flags A and B to "0". In this case, if the model M1 of Fig. 2(A) is being traced, the X coordinates of the point $b_1$ is stored and, if the model M2 of Fig. 2(B) is being traced, the X coordinates of the point $b_2$ is stored. After completion of such tracing, the processor CPU reads out the polarity PH and the trace direction TD stored in the memory MEM and then decides whether the interior length or exterior one has been measured as shown in Table 1.

Table 1

| TD | PH | |
|----|----|----|
| positive | positive | interior length |
| positive | negative | exterior length |
| negative | positive | exterior length |
| negative | negative | interior length |

In the case where it has been turned out as a result of the decision that the interior length was measured, the processor CPU conducts a calculation of the following equation (4) or (5) depending on whether the trace direction TD is positive or negative, thus obtaining the work size $\ell_W$ at the measurement position.

$$\ell_W = X_2 - X_1 + 2R_C \quad \cdots\cdots\cdots\cdots\cdots\cdots \quad (4)$$

$$\ell_W = X_1 - X_2 + 2R_C \quad \cdots\cdots\cdots\cdots\cdots\cdots \quad (5)$$

(where $X_1$ and $X_2$ are coordinates values of the X coordinates stored in the memory MEM and $2R_C$ is the radius of the cutter CT). Next, the processor CPU reads out the model size $\ell_0$ at the measurement position, stored in the memory MEM, and conducts a calculation of the following equation (6), obtaining the difference $\Delta\ell$ between the model size $\ell_0$ and the work size $\ell_W$ at the measurement

$$\Delta\ell = \ell_W - \ell_0 \quad \cdots\cdots\cdots\cdots\cdots\cdots\cdots\cdots \quad (6)$$

And, if the difference $\Delta\ell$ is positive, the processor CPU stops the operation and if $\Delta\ell$ is negative, the operation of the flowchart of Fig. 4 is carried out.

In the case where it has been decided that the exterior length was measured, the following equation (7) or (8) is calculated depending on whether the trace direction TD is positive or negative:

$$\ell_W = X_2 - X_1 - 2R_C \quad \cdots\cdots\cdots\cdots\cdots\cdots \quad (7)$$

$$\ell_W = X_1 - X_2 - 2R_C \quad \cdots\cdots\cdots\cdots\cdots\cdots \quad (8)$$

Next, the following equation (9) is computed, obtaining the difference $\Delta\ell$ between the work size $\ell_W$ and the model size $\ell_0$ at the measurement position.

$$\Delta\ell = \ell_W - \ell_0 \quad \cdots\cdots\cdots\cdots\cdots\cdots\cdots \quad (9)$$

And, if the difference $\Delta\ell$ is negative, the operation is finished and, if the difference $\Delta\ell$ is positive, the operation of the flowchart shown in Fig. 4 is performed.

Next, the processor CPU follows the flowchart of Fig. 4 to operate the automatic cutter change mechanism ATC, changing the cutter. In this case, the processor CPU selects first a desired one of a plurality of cutters set in the automatic cutter change mechanism ATC in the following manner: Incidentally, let it be assumed, in this case, that n cutters of radii $(R_C)_1$, $(R_C)_2$, $\cdots$ $\cdots$ $(R_C)_n$ are set in the automatic cutter change mechanism ATC, and that they bear a relationship $(R_C)_1 < (R_C)_2 < \cdots\cdots < (R_C)_n$.

At first, the processor CPU sequentially changes the cutter radius and conducts a calculation shown by the following equation (10):

$$\Delta \ell - 2 \cdot (R_C)_N = A_N \quad \cdots\cdots\cdots\cdots\cdots\cdots \quad (10)$$

(where N is an integer).

The cutter radius is obtained first which makes $A_N$ nagative, and then a cutter select signal to the effect that a cutter of a radius small next to the abovesaid one is selected is provided via the data output device DO to the automatic cutter change mechanism ATC. The automatic cutter change mechanism ATC performs the cutter changing operation and, upon completion of the operation, applies its information via the data input device DI to the processor CPU. Having detected completion of the cutter changing operation, the processor CPU changes the reference displacement to $\epsilon_0 + \dfrac{A_N}{2}$ and provides it to the adder ADD via the data output device DO and the DA converter DA, resuming tracing.

- 10 -

According to this embodiment, as described above, the difference $\Delta \ell$ between the work size $\ell_W$ and the model size $\ell_0$ is automatically obtained, and the cutter radius and the reference displacement are changed so that the difference $\Delta \ell$ may become zero, after which tracing is resumed. Hence, the work can automatically be cut into the same configuration as the model with high accuracy.

While in the above embodiment the measurement is effected at one position, it is also possible to carry out the measurement at a plurality of positions, obtain the difference between the model size and the work size at each measurement position and change the cutter radius and the reference displacement so that the mean value of the differences obtained may become zero, whereby to provide for enhanced reliability. In this case, tracing operation data including data on a plurality of position information for specifying a plurality of positions on the model M, the model size at each of the plurality of specified positions and the cutter radius are entered from the keyboard KB to the memory MEM for storage. During tracing the work size at the abovesaid plurality of specified positions is detected by the processor CPU based on the results of detection by the position detectors PCX, PCY and PCZ and the cutter radius. Further, the mean value of the differences between the work size and the model size at the plurality of specified positions is obtained in the processor CPU and this mean value of the differences is stored in the memory MEM. After completion of tracing, the reference displacement and the cutter radius are changed based on the mean value of the differences, and then tracing is effected again.

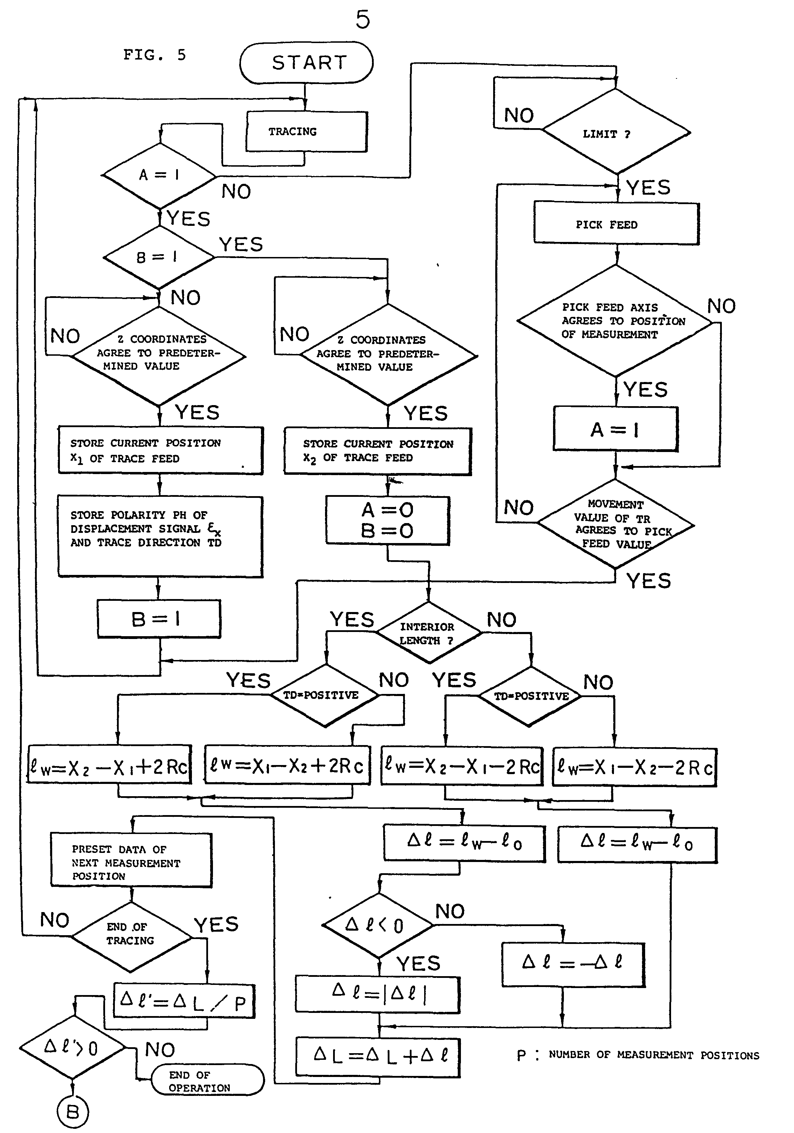

With reference to the flowcharts shown in Figs. 5 and 4, the operation will hereinbelow be described. In Fig. 5, the trace feed axis is the X axis and the flags A and B are set to "0" at the initial state.

When the pick feed axis has come into agreement with a first measurement position after starting the tracing operation, the processor CPU stores in the memory MEM, in the same manner as described previously, the X coordinates $X_1$ when the Z coordinates of the tracer head TR has reached a predetermined value, along with the polarity PH of the displacement signal $\epsilon_X$ and the trace direction TD at this time, and stores the X coordinates $X_2$ in the memory MEM when the Z coordinates of the tracer head TR has reached again the predetermined value.

Next, the processor CPU reads out the polarity PH and the trace direction stored in the memory MEM and decides whether the interior length or exterior one has been measured at the first measurement position as shown in the aforementioned Table 1.

In the case of the interior length, the processor CPU conducts the operation of the aforementioned equations (4) or (5) depending on whether the trace direction TD is positive or negative, obtaining the work size $\ell_W$ at the first measurement position. Then, the processor reads out the model size $\ell_0$ at

the first measurement position stored in the memory MEM and conducts the operation of the aforesaid equation (6) to obtain the difference $\Delta\ell$ between the work size $\ell_W$ and the model size $\ell_0$. And, if the difference $\Delta\ell$ is negative, the processor CPU stores its absolute value $|\Delta\ell|$ as $\Delta L$ in the memory MEM and, if the difference $\Delta\ell$ is positive, stores, as $\Delta L$, a value with its sign inverted $-\Delta\ell$ in the memory MEM.

In the case of the exterior length, the operation of the aforementioned equation (7) or (8) is conducted depending on whether the trace direction TD is positive or negative, obtaining the work $\ell_W$ at the first measurement position. Next, the model size $\ell_0$ at the first measurement position stored in the memory MEM is read out and the operation of the aforesaid equation (9) is carried out to obtain the difference $\Delta\ell$ between the work size $\ell_W$ and the model $\ell_0$. And the processor CPU stores the difference $\Delta\ell$ as $\Delta L$ in the memory MEM.

Then, the processor CPU reads out data on the second measurement position from the memory MEM and performs the same operations as mentioned above, obtaining the difference $\Delta\ell$ between the work size $\ell_W$ and the model size $\ell_0$ at the second measurement position.

And, in the case of the exterior length at the second measurement position, the difference $\Delta\ell$ obtained and $\Delta L$ read out from the memory MEM are added and the addition result is stored as $\Delta L$ in the memory MEM. In the case of the interior length at the second measurement position, a value obtained by inverting the sign of the difference $\Delta\ell$ and $\Delta L$ read out from the memory MEM are added and the addtion result is stored as $\Delta L$ in the memory MEM.

Such an operation as described above is carried out for each of the measurement positions and, upon completion of tracing, the processor CPU reads out $\Delta L$ from the memory MEM and conducts an operation of the following equation (11), obtaining a mean value $\Delta\ell'$ of the difference between the model size and the work size:

$$\Delta\ell' = \Delta L/P \quad\cdots\cdots\cdots\cdots\cdots\cdots\cdots\cdots \quad (11)$$

(where P is the number of measurement positions).

And, in the case where the mean value $\Delta\ell'$ of the difference is negative, the operation is finished and in the case of positive, the operation of the flowchart shown in Fig. 4 is performed. In this case, the operation differs from the operation in the case of one measurement position only in that $A_n$ is obtained by the following equation (12):

$$\Delta\ell' - 2 \cdot (R_C)_N = A_N \quad\cdots\cdots\cdots\cdots\cdots\cdots \quad (12)$$

Although in the above embodiment the difference $\Delta\ell$ is obtained from the measured work size $\ell_W$ and the preknown model size $\ell_0$, it can also be obtained in such a manner as described below.

For example, the model size $\ell_{M1}$ of the model M1 shown in Fig. 2(A) is as given by the following equation (13), assuming that the displacements of the stylus ST at the points $a_1$ and $b_1$, that is, at both ends of the measurement position, are $\epsilon_1$ and $\epsilon_2$, respectively.

$$\ell_{M1} = \ell + (R_S - \epsilon_1) + (R_S - \epsilon_2)$$
$$= \ell + 2R_S - \epsilon_1 - \epsilon_2 \quad \cdots\cdots\cdots\cdots \quad (13)$$

where $R_S$ is the radius of the stylus ST.

Since the work size $\ell_{W1}$ at this time is expressed by $\ell_{W1} = \ell + 2R_C$ as shown in Eq. (2), the difference $\Delta\ell$ becomes as given by the following equation (14):

$$\Delta\ell = \ell_{M1} - \ell_{W1}$$
$$+ 2(R_S + R_C) - \epsilon_1 - \epsilon_2 \quad \cdots\cdots\cdots\cdots \quad (14)$$

Accordingly, the difference $\Delta\ell$ can be obtained by entering the cutter radius $R_C$ and the stylus radius $R_S$ from the keyboard KB in advance, obtaining the displacement at either end of the measurement positions and conducting the operation of Eq. (14).

Further, the model size $\ell_{M2}$ of the model M2 shown in Fig. 2(B) becomes such as shown in the following equation (L5), assuming that the displacements of the stylus ST at the both ends of the measurement position are $\epsilon_1$ and $\epsilon_2$, respectively.

$$\ell_{M2} = \ell - (R_S - \epsilon_1) - (R_S - \epsilon_2)$$
$$= \ell - 2R_S + \epsilon_1 + \epsilon_2 \quad \cdots\cdots\cdots\cdots \quad (15)$$

Since the work size $\ell_{W2}$ is $\ell_{W2} = \quad - 2R_C$ as given by Eq. (3), the difference $\Delta\ell$ becomes as given by the following equation (16):

$$\Delta\ell = \ell_{M2} - \ell_{W2}$$
$$= 2(R_C - R_S) + \epsilon_1 + \epsilon_2 \quad \cdots\cdots\cdots\cdots \quad (16)$$

Accordingly, the difference $\Delta \ell$ can be obtained by obtaining the displacement at either end of the measurement position and conducting the operation shown in Eq. (16).

Although in the foregoing embodiment the difference between the work size and the model size is reduced to zero by changing the reference displacement and the cutter radius, it is a matter of course to arrange so that only the reference displacement or the stylus radius and the reference displacement are changed.

As has been described in the foregoing, according to the present invention, the difference between the model size and the work size at a predetermined position is automatically obtained, the cutting conditions related to infeed, such as the reference displacement, the cutter radius, the stylus radius and so forth, are changed so that the difference may become zero, and then tracing is resumed; accordingly, the present invention possesses the advantages that the work can be cut into the same configuration as the model and that the cutting time can be reduced. Moreover, according to the present invention, a plurality of measurement positions are provided, the difference between the model size and the work size at each of the measurement positions is obtained and the cutting conditions related to infeed are changed so that the difference may become zero; the present invention has the advantage that the reliability is enhanced.

CLAIM:

1. An automatic tracer control system which performs tracer control through computation of a trace direction and a trace velocity based on signals from a tracer head tracing the surface of a model characterized in that there are provided input means for entering position information for specifying a predetermined position on the model and detecting means for detecting the position of the tracer head; the size of a work at the predetermined position is computed based on the position information and the result of detection by the detecting means; a difference is detected between the work size and the size of the model at the predetermined position; after completion of tracing, cutting conditions related to infeed are changed so that the difference may become zero; and tracing is resumed.

2. An automatic tracer control system which performs tracer control through computation of a trace direction and a trace velocity based on signals from a tracer head tracing the surface of a model, characterized in that there are provided input means for entering position information for specifying a plurality of predetermined positions on the model and detecting means for detecting the position of the tracer head; the size of a work at each of the plurality of predetermined positions is computed based on the position information and the results of detection by the detecting means; a difference is detected between the work size and the size of the model at each of the plurality of predetermined positions; after completion of tracing, cutting conditions related to infeed are changed so that the mean value of the differences may become zero; and tracing is resumed.

FIG. 1

FIG. 2

FIG. 3

0065990

4

FIG. 4

SELECT FROM SET
CUTTER RADDI $(R_c)_1$,
$(R_c)_2$, ... $(R_c)_n$

SELECT FROM SET
CUTTER RADDI $(R_c)_1$,
$(R_c)_2$, ... $(R_c)_n$

$$\Delta \ell - 2 \cdot (R_c)_N \rightarrow A_N$$

$$\Delta \ell' - 2 \cdot (R_c)_N \rightarrow A_N$$

$A_N < 0$

YES

NO

$N = N + 1$

SELECT CUTTER OF
$N = N - 1$

$N - 1$ CUTTER SELECT
SIGNAL OUTPUT

$$\varepsilon_0 + \frac{A_N}{2} \rightarrow \varepsilon_0$$

NO

IS CUTTER
CHANGE
COMPLETE ?

YES

RESUME  TRACING

FIG. 5

5

P : NUMBER OF MEASUREMENT POSITIONS

# INTERNATIONAL SEARCH REPORT

0065990

International Application No PCT/JP81/00287

## I. CLASSIFICATION OF SUBJECT MATTER (if several classification symbols apply, indicate all) 3

According to International Patent Classification (IPC) or to both National Classification and IPC

Int. Cl.$^3$ B23Q 35/12, B23Q 15/22

## II. FIELDS SEARCHED

| Minimum Documentation Searched 4 | |
|---|---|
| Classification System | Classification Symbols |
| I P C | B23Q 33/00, B23Q 35/00, B23Q 15/12, B23Q 15/20 |

Documentation Searched other than Minimum Documentation
to the Extent that such Documents are Included in the Fields Searched 5

| | |
|---|---|
| Jitsuyo Shinan Koho | 1926 – 1981 |
| Kokai Jitsuyo Shinan Koho | 1971 – 1981 |

## III. DOCUMENTS CONSIDERED TO BE RELEVANT 14

| Category * | Citation of Document, 16 with indication, where appropriate, of the relevant passages 17 | Relevant to Claim No. 18 |
|---|---|---|
| A | JP,A, 55-58954 (Fujitsu Fanuc Limited) 2, May, 1980 (02.05.80) | 1 – 2 |
| A | JP,A, 55-5215 (Makino Furaisu Seisakusho) 16, January, 1980 (16.01.80) | 1 – 2 |
| A | JP,B1, 43-24509 (Fujitsu Limited) 23, October, 1968 (23.10.68) | 1 – 2. |
| A | JP,A, 55-49709 (Osaka Kiko Kabushiki Kaisha) 10, April, 1980 (10.04.80) | 1 – 2 |
| | "A" document defining the general state of the art which is not considered to be of particular relevance | |

* Special categories of cited documents: 15

"A" document defining the general state of the art
"E" earlier document but published on or after the international filing date
"L" document cited for special reason other than those referred to in the other categories
"O" document referring to an oral disclosure, use, exhibition or other means

"P" document published prior to the international filing date but on or after the priority date claimed
"T" later document published on or after the international filing date or priority date and not in conflict with the application, but cited to understand the principle or theory underlying the invention
"X" document of particular relevance

## IV. CERTIFICATION

| Date of the Actual Completion of the International Search 2 | Date of Mailing of this International Search Report 2 |
|---|---|
| December 23, 1981 (23.12.81) | January 18, 1982 (18.01.82) |

| International Searching Authority 1 | Signature of Authorized Officer 20 |
|---|---|
| Japanese Patent Office | |

Form PCT/ISA/210 (second sheet) (October 1977)